(19) **Europäisches Patentamt / European Patent Office / Office européen des brevets**

(11) **EP 4 618 186 A1**

(12) # EUROPEAN PATENT APPLICATION
published in accordance with Art. 153(4) EPC

(43) Date of publication:
**17.09.2025 Bulletin 2025/38**

(21) Application number: **23927085.3**

(22) Date of filing: **13.10.2023**

(51) International Patent Classification (IPC):
**H01M 4/36** (2006.01)　　**H01M 4/58** (2010.01)
**H01M 10/054** (2010.01)

(52) Cooperative Patent Classification (CPC):
**H01M 4/36; H01M 4/58; H01M 4/62; H01M 10/054; Y02E 60/10**

(86) International application number:
**PCT/CN2023/124542**

(87) International publication number:
**WO 2024/187741 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.03.2023　CN 202310232757**

(71) Applicant: **Contemporary Amperex Technology (Hong Kong) Limited**
**Central (HK)**

(72) Inventors:
• **YANG, Huiling**
**Ningde, Fujian 352100 (CN)**

• **ZHAO, Yuzhen**
**Ningde, Fujian 352100 (CN)**
• **XU, Yue**
**Ningde, Fujian 352100 (CN)**
• **GUAN, Yingjie**
**Ningde, Fujian 352100 (CN)**
• **WEN, Yan**
**Ningde, Fujian 352100 (CN)**
• **HUANG, Qisen**
**Ningde, Fujian 352100 (CN)**

(74) Representative: **Gong, Jinping**
**CocreateIP**
**Neumarkter Straße 21**
**81673 München (DE)**

(54) **POSITIVE ELECTRODE ACTIVE MATERIAL AND PREPARATION METHOD THEREFOR, SECONDARY BATTERY AND ELECTRIC DEVICE**

(57)　A positive electrode active material and a preparation method therefor, a secondary battery and an electrical device. The positive electrode active material comprises a polyanionic compound having a general formula as shown in formula I. The positive electrode active material has a crystallinity of 0.8-1. Formula I: $Na_xFe_{y1}M_{y2}(PO_4)_z(P_2O_7)_k$, wherein M comprises at least one of Mg, Al, Sc, Ti, V, Cr, Mn, Fe, Co, Ni, Cu, Zn, Zr, Nb, Mo, Sn, Hf, Ta, W and Pb, $1 \le x \le 7$, $1 \le y1 + y2 \le 4$, $1 \le z \le 2$, and $1 \le k \le 4$. The positive electrode active material has relatively high crystallinity and is beneficial for improving the initial discharge capacity of a battery.

FIG. 1a

EP 4 618 186 A1

**Description**

CROSS-REFERENCE

The present application refers to Chinese Patent Application No. 202310232757.2, entitled "POSITIVE ELECTRODE ACTIVE MATERIAL AND PREPARATION METHOD THEREFOR, SECONDARY BATTERY AND ELECTRIC DEVICE", filed on March 10, 2023, which is incorporated herein by reference in its entirety.

TECHNICAL FIELD

The present application relates to the technical field of secondary batteries, and in particular, to a positive electrode active material and a preparation method therefor, a secondary battery and an electric device.

BACKGROUND

Sodium batteries have great application potential in large-scale energy storage due to the abundant reserves of sodium, low prices, and wide operating temperature range.
Iron-based polyanionic compounds are considered to be the most promising type of electrode materials due to their excellent structural stability, safety and suitable voltage plateau. However, current sodium batteries with iron-based polyanionic compounds as positive electrode materials still face many problems. These issues make them unable to meet the application requirements of the new generation of electrochemical systems.

SUMMARY

The present application is made in view of the problems described above, and its purpose is to provide a positive electrode active material with high crystallinity, which is beneficial for increasing the first discharge capacity of the battery.
A first aspect of the present application provides a positive electrode active material. The positive electrode active material includes a polyanionic compound having a general formula shown in formula I, and the positive electrode active material has a crystallinity of 0.8-1,

$$Na_xFe_{y1}M_{y2}(PO_4)_z(P_2O_7)_k \qquad \text{Formula I}$$

where M includes at least one of Mg, Al, Sc, Ti, V, Cr, Mn, Fe, Co, Ni, Cu, Zn, Zr, Nb, Mo, Sn, Hf, Ta, W, and Pb; $1 \leq x \leq 7$, $1 \leq y_1 + y_2 \leq 4$, $1 \leq z \leq 2$, and $1 \leq k \leq 4$.
The positive electrode active material with crystallinity of 0.8-1 is beneficial for increasing the first discharge capacity of the battery, so as to provide the battery with a relatively high charging capability, thereby enhancing the battery performance.
In any embodiment, the intensity of a (602) peak and the intensity of a (022) peak in an XRD diffraction pattern of the positive electrode active material are at a ratio Id of 0.9-1.5.
The applicant unexpectedly discovered that the higher the ratio Id of the intensity of the (602) peak to the intensity of the (022) peak in the XRD diffraction pattern, the better the electrochemical performance of the positive electrode active material.
In any embodiment, the positive electrode active material further includes a carbon material located on at least a portion of the surface of primary particles of the polyanionic compound.
The carbon material located on the surface of the primary particle can significantly mitigate the problem of poor conductivity of the iron-based polyanionic compound, thereby greatly enhancing the electrochemical performance of the positive electrode active material.
A second aspect of the present application provides a preparation method for a positive electrode active material. The method includes the following steps:

mixing a raw material including a sodium source, an iron source, and a phosphorus source with a solvent to obtain a mixed slurry, where optionally, the raw material further includes an M source; and

drying and calcinating the mixed slurry to obtain a positive electrode active material, where the positive electrode active material includes a polyanionic compound having shown in formula I, and the positive electrode active material has a crystallinity of 0.8-1,

$$Na_xFe_{y1}M_{y2}(PO_4)_z(P_2O_7)_k \qquad \text{Formula I}$$

where M includes at least one of Mg, Al, Sc, Ti, V, Cr, Mn, Fe, Co, Ni, Cu, Zn, Zr, Nb, Mo, Sn, Hf, Ta, W, and Pb; $1 \leq x \leq 7$, $1 \leq y_1 + y_2 \leq 4$, $1 \leq z \leq 2$, and $1 \leq k \leq 4$.

The positive electrode active material with crystallinity of 0.8-1 is beneficial for increasing the first discharge capacity of the battery, so as to provide the battery with a relatively high charging capability, thereby enhancing the battery performance.

In any embodiment, mixing the raw material including the sodium source, the iron source, and the phosphorus source with the solvent to obtain the mixed slurry specifically includes:
stirring and grinding the raw material including the sodium source, ferrous oxalate, and the phosphorus source added into the solvent to obtain the mixed slurry, where the mixed slurry is subjected to a homogeneous shear rate of $300\ S^{-1}\text{-}900\ S^{-1}$.

The homogeneous shear rate during stirring is controlled to be $300\ S^{-1}\text{-}900\ S^{-1}$. A high homogeneous shear rate is beneficial for avoiding or reducing the wrapping of the unreacted ferrous oxalate by a precursor generated by the reaction of the sodium source, the phosphorus source and the ferrous oxalate, so as to fully expose the unreacted ferrous oxalate to ensure its complete reaction, thereby increasing the crystallinity of the positive electrode active material.

In any embodiment, the median particle size Dv50 of the particles in the mixed slurry is 0.05 $\mu$m-1.5 $\mu$m, and optionally 0.1 $\mu$m-0.7 $\mu$m.

Controlling the median particle size Dv50 of the particles in the mixed slurry to be within an appropriate particle size range can not only avoid the relatively long grinding time required due to a too-small particle size and the increased risk of subsequent physical gelation of the slurry, thereby reducing the difficulty of subsequent processing and the requirements for production devices, but also reduce the presence of the relatively low crystallinity and a relatively large number of impurity phases in the positive electrode active material due to a too-large particle size, thereby ensuring the dynamics performance of the positive electrode active material during the charging and discharging.

In any embodiment, the solid content of the mixed slurry is 15%-50%, and optionally 25%-40%.

Controlling the solid content of the mixed slurry to be within an appropriate range can not only avoid the reduction in production capacity due to a too-low solid content of the mixed slurry, which causes mass production feasible, but also avoid the increased equipment wear and requirements for production devices due to a too-high solid content of the mixed slurry, thereby balancing production costs and production scale to ensure that the mixed slurry is suitable for industrial applications.

In any embodiment, the mixed slurry includes a carbon source.

The addition of the carbon source is beneficial for enhancing the conductive performance of the positive electrode active material and increasing the first discharge capacity of the battery.

In any embodiment, adding the raw material including the sodium source, the iron source, and the phosphorus source into the solvent to obtain the mixed slurry specifically includes:
stirring and grinding the raw material including the sodium source, ferrous oxalate and phosphorus source added into the solvent until the median particle size Dv50 of the particles in the slurry is 0.05 $\mu$m-1.5 $\mu$m, and then mixing the slurry with the carbon source to obtain the mixed slurry.

Controlling the median particle size Dv50 of the particles in the mixed slurry to be within an appropriate particle size range can not only avoid the relatively long grinding time required due to a too-small particle size and the increased risk of subsequent physical gelation of the slurry, thereby reducing the difficulty of subsequent processing and the requirements for production devices, but also reduce the presence of the relatively low crystallinity and a relatively large number of impurity phases in the positive electrode active material due to a too-large particle size, thereby ensuring the dynamics performance of the positive electrode active material during the charging and discharging.

In any embodiment, the preparation method includes:
stirring and grinding the raw material including the sodium source, ferrous oxalate and phosphorus source added into the solvent until the median particle size Dv50 of the particles in the slurry is 0.1 $\mu$m-0.7 $\mu$m, and then mixing the slurry with the carbon source to obtain the mixed slurry.

Further controlling the median particle size Dv50 of the particles in the mixed slurry to be 0.1 $\mu$m-0.7 $\mu$m before mixing with the carbon source reduces the difficulty of initial grinding. The addition of the carbon source can significantly increase the viscosity of the slurry, and increase the grinding power and grinding time.

In any embodiment, the sodium source includes one or more of sodium carbonate, sodium phosphate, sodium dihydrogen phosphate, disodium hydrogen phosphate, sodium pyrophosphate, sodium bicarbonate, sodium oxalate, sodium acetate, sodium citrate, sodium nitrate, and sodium hydroxide.

In any embodiment, the phosphorus source includes one or more of sodium dihydrogen phosphate, disodium hydrogen phosphate, sodium phosphate, ammonium dihydrogen phosphate, diammonium hydrogen phosphate, sodium pyrophosphate, trisodium monohydrogen pyrophosphate, disodium dihydrogen pyrophosphate, monosodium trihydrogen pyrophosphate, phosphoric acid, and pyrophosphoric acid.

In any embodiment, the solvent includes one or more of ethanol, water, and ethylene glycol.

The solvent and dispersant described above are both beneficial for the complete dissolution and dispersion of the raw material to form a uniformly mixed slurry, thus facilitating the control of the size of particles in the mixed slurry.

In any embodiment, the carbon source includes an inorganic carbon source or an organic carbon source. The inorganic carbon source includes one or more of natural graphite, artificial graphite, carbon black, a carbon nanotube, and graphene, and the organic carbon source includes one or more of sucrose, glucose, citric acid, starch, cyclodextrin, and asphalt.

Both the inorganic carbon source and the organic carbon source are beneficial for enhancing the conductive performance of the positive electrode active material.

A third aspect of the present application provides a secondary battery. The secondary battery includes a positive electrode plate and a negative electrode plate, where the positive electrode plate includes the positive electrode active material according to the first aspect or a positive electrode active material prepared by the preparation method according to the second aspect.

In any embodiment, the secondary battery is a negative electrode-free sodium secondary battery.

In any embodiment, the negative electrode plate includes a negative electrode current collector and a bottom coating arranged on at least one surface of the negative electrode current collector, and the bottom coating includes one or more of a carbon nanotube, graphite, graphene, a silver-carbon composite nanoparticle, and a tin-carbon composite nanoparticle.

The bottom coating described above not only has excellent electrical conductivity, but is also conducive to the uniform deposition of metal ions on the surface of the current collector, thereby improving the cycle performance and safety of the battery.

In any embodiment, the surface density of the bottom coating is 5 g/m$^2$-50 g/m$^2$.

The bottom coating with a surface density of 5 g/m$^2$ to 50 g/m$^2$ is conducive to the uniform distribution of nucleation sites, promotes the uniform deposition of metals, and does not affect the transmission of electrons.

In any embodiment, the thickness of the bottom coating is 2 $\mu$m-100 $\mu$m.

The thickness of the bottom coating is controlled to be 2 $\mu$m to 100 $\mu$m, and thus sufficient nucleation sites can be provided, which is conducive to the uniform deposition of metal ions, thereby inhibiting dendrite formation.

A fourth aspect of the present application provides an electric device. The electric device includes the secondary battery according to the third aspect of the present application.

BRIEF DESCRIPTION OF THE DRAWINGS

FIG. 1a is an X-ray diffraction pattern of a positive electrode active material precursor according to some examples and comparative examples of the present application;

FIG. 1b is a standard X-ray diffraction pattern of ferrous oxalate;

FIG. 2a is an X-ray diffraction pattern of a positive electrode active material according to examples and comparative examples of the present application;

FIG. 2b is a standard X-ray diffraction pattern of sodium ferric pyrophosphate phosphate;

FIG. 3 is a schematic diagram of a secondary battery according to one embodiment of the present application;

FIG. 4 is an exploded view of the secondary battery according to one embodiment of the present application as shown in FIG. 3;

FIG. 5 is a schematic diagram of a battery module according to one embodiment of the present application;

FIG. 6 is a schematic diagram of a battery pack according to one embodiment of the present application;

FIG. 7 is an exploded view of the battery pack according to one embodiment of the present application as shown in FIG. 6;

FIG. 8 is a schematic diagram of an electric device using a secondary battery as a power source according to one embodiment of the present application.

Description of the reference numerals:

1: battery pack; 2: upper case body; 3: lower case body; 4: battery module; 5: secondary battery; 51: housing; 52: electrode assembly; 53: cover plate.

DETAILED DESCRIPTION

Hereinafter, embodiments specifically disclosing the positive electrode active material and the preparation method therefor, the secondary battery, the battery module, the battery pack, and the electric device of the present application are described in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer $\geq 2$, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": Ais true (or present) and B is false (or absent); A is false (or absent) and B is true (or present); or both A and B are true (or present).

In the prior art, sodium ferric pyrophosphate phosphate is commonly used as the positive electrode material for sodium batteries. However, existing processes face challenges in preparing sodium ferric pyrophosphate phosphate materials with high crystallinity, which affects the electrochemical performance of the sodium ferric pyrophosphate phosphate materials. The applicant unexpectedly discovered that the difficulty in increasing the crystallinity of sodium ferric pyrophosphate phosphate is due to the fact that in the mechanical solid-phase synthesis process, intermediate products (such as a precursor) are easy to coat the surface of the iron source, preventing the iron source from being exposed and continuing to participate in the reaction.

[Positive Electrode Active Material]

Based on this, the present application provides a positive electrode active material. The positive electrode active material includes a polyanionic compound having shown in formula I, and the positive electrode active material has a crystallinity of 0.8-1,

$$Na_xFe_{y1}M_{y2}(PO_4)_z(P_2O_7)_k \qquad \text{Formula I}$$

where M includes at least one of Mg, Al, Sc, Ti, V, Cr, Mn, Fe, Co, Ni, Cu, Zn, Zr, Nb, Mo, Sn, Hf, Ta, W, and Pb; $1 \le x \le 7$, $1 \le y_1 + y_2 \le 4$, $1 \le z \le 2$, and $1 \le k \le 4$.

In some embodiments, M includes Mg. In some embodiments, M includes Al. In some embodiments, M includes V. In some embodiments, M includes Mn.

In some embodiments, x is optionally 1, 1.5, 2, 2.5, 3, 3.5, 4, 4.5, 5, 5.5, 6, 6.5, 7, or a numerical value in a range formed by any two of the foregoing values; $y_1$ and $y_2$ are optionally 1, 1.5, 2, 2.5, 3, 3.5, 4, or a numerical value in a range formed by any two of the foregoing values; z is optionally 1, 1.1, 1.2, 1.3, 1.4, 1.5, 1.6, 1.7, 1.8, 1.9, 2, or a numerical value in a range formed by any two of the foregoing values; and k is optionally 1, 1.5, 2, 2.5, 3, 3.5, 4, or a numerical value in a range formed by any two of the foregoing values.

The crystallinity of the positive electrode active material can be measured by any known means, including but not limited to an X-ray diffractometer. As an example, in the pattern of the X-ray diffractometer, the area of the strongest diffraction peak is compared with the integrated area (Ag) of the peak in the standard substance card, and the area of the strongest diffraction peak and Ag are used as parameters for measuring crystallinity, which is calculated as crystallinity = As/Ag $\times$ 100%. For the sodium ferric pyrophosphate phosphate according to the present application, the area of the (222) peak and its integrated area in the standard card are used as parameters for calculating crystallinity. The integrated area of the diffraction peak can be directly calculated using Jade.

The positive electrode active material with crystallinity of 0.8-1 is beneficial for increasing the first discharge capacity of the battery, so as to provide the battery with a relatively high charging capability, thereby enhancing the battery performance.

In some embodiments, the ratio Id of the intensity of the (602) peak to the intensity of the (022) peak in the XRD diffraction pattern of the positive electrode active material is 0.9-1.5.

The ratio Id of the intensity of the (602) peak to the intensity of the (022) peak in the XRD diffraction pattern of the positive electrode active material can be measured by any known means, including but not limited to an X-ray diffractometer. As an example, the XRD pattern of the positive electrode active material is tested by the X-ray method, and the ratio of the intensity of the (602) peak to the intensity of the (022) peak is calculated as Id = $I_{(602)}/I_{(022)}$. The intensity of the peak can be directly calculated using Jade. The ratio of the intensity of the (602) peak to the intensity of the (022) peak in the standard card for $Na_4Fe_3(PO_4)_2(P_2O_7)_4$ is 1.15.

In some embodiments, the ratio Id of the intensity of the (602) peak to the intensity of the (022) peak in the XRD diffraction pattern of the positive electrode active material is optionally 0.9, 1, 1.1, 1.2, 1.3, 1.4, or 1.5.

The applicant unexpectedly discovered that the higher the ratio Id of the intensity of the (602) peak to the intensity of the (022) peak in the XRD diffraction pattern, the better the electrochemical performance of the positive electrode active material.

In some embodiments, the positive electrode active material further includes a carbon material located on at least a portion of the surface of primary particles of the polyanionic compound.

The carbon material located on the surface of the primary particle can significantly mitigate the problem of poor conductivity of the iron-based polyanionic compound, thereby greatly enhancing the electrochemical performance of the positive electrode active material.

In some embodiments, the carbon material is distributed between primary particles of the polyanionic compound in the form of particles.

In some embodiments, the carbon material is inorganic carbon, which has a high crystallinity, a large particle size, and strong conductivity, and thus can effectively enhance the conductive performance of the positive electrode active material.

In some embodiments, the carbon material coats the surface of primary particles of the polyanionic compound in the form of a carbon film.

In some embodiments, the carbon material is amorphous carbon, which coats the surface of the polyanionic compound to increase the contact area with the active material, thereby enhancing the electronic conductivity.

The introduction of the carbon material into the positive electrode active material is beneficial for enhancing conductive performance, thereby optimizing the coulombic efficiency and cycle performance of the battery.

The present application further provides a preparation method for a positive electrode active material. The method includes the following steps:

adding a raw material including a sodium source, an iron source, and a phosphorus source into a solvent to obtain a mixed slurry, where optionally, the raw material further includes an M source; and

drying and calcinating the mixed slurry to obtain a positive electrode active material, where the positive electrode active material includes a polyanionic compound having shown in formula I, and the positive electrode active material has a crystallinity of 0.8-1,

$$Na_xFe_{y1}M_{y2}(PO_4)_z(P_2O_7)_k \qquad \text{Formula I}$$

where M comprises at least one of Mg, Al, Sc, Ti, V, Cr, Mn, Fe, Co, Ni, Cu, Zn, Zr, Nb, Mo, Sn, Hf, Ta, W, and Pb; $1 \leq x \leq 7$, $1 \leq y_1 + y_2 \leq 4$, $1 \leq z \leq 2$, and $1 \leq k \leq 4$.

In some embodiments, M includes Mg. In some embodiments, M includes Al. In some embodiments, M includes V. In some embodiments, M includes Mn.

In some embodiments, x is optionally 1, 1.5, 2, 2.5, 3, 3.5, 4, 4.5, 5, 5.5, 6, 6.5, 7, or a numerical value in a range formed by any two of the foregoing values; $y_1$ and $y_2$ are optionally 1, 1.5, 2, 2.5, 3, 3.5, 4, or a numerical value in a range formed by any two of the foregoing values; z is optionally 1, 1.1, 1.2, 1.3, 1.4, 1.5, 1.6, 1.7, 1.8, 1.9, 2, or a numerical value in a range formed by any two of the foregoing values; and k is optionally 1, 1.5, 2, 2.5, 3, 3.5, 4, or a numerical value in a range formed by any two of the foregoing values.

The positive electrode active material with crystallinity of 0.8-1 is beneficial for increasing the first discharge capacity of the battery, so as to provide the battery with a relatively high charging capability, thereby enhancing the battery performance.

In some embodiments, adding the raw material including the sodium source, the iron source, and the phosphorus source into the solvent to obtain the mixed slurry specifically includes:
stirring and grinding the raw material including the sodium source, ferrous oxalate, and the phosphorus source added into the solvent to obtain the mixed slurry, where the mixed slurry is subjected to a homogeneous shear rate of $300\ S^{-1}$-$900\ S^{-1}$.

In some embodiments, the homogeneous shear rate is optionally $300\ S^{-1}$, $350\ S^{-1}$, $400\ S^{-1}$, $450\ S^{-1}$, $500\ S^{-1}$, $550\ S^{-1}$, $600\ S^{-1}$, $650\ S^{-1}$, $700\ S^{-1}$, $750\ S^{-1}$, $800\ S^{-1}$, $850\ S^{-1}$, $900\ S^{-1}$, or a numerical value in a range formed by any two of the foregoing values.

The homogeneous shear rate is a parameter comprehensively related to the stirring parameters, fluid viscosity, and volume, and can be calculated by any known methods. The homogeneous shear rate during stirring is controlled to be $300\ S^{-1}$-$900\ S^{-1}$. A high homogeneous shear rate is beneficial for avoiding or reducing the wrapping of the unreacted ferrous oxalate by a precursor generated by the reaction of the sodium source, the phosphorus source and the ferrous oxalate, so as to fully expose the unreacted ferrous oxalate to ensure its complete reaction, thereby increasing the crystallinity of the positive electrode active material.

In some embodiments, the median particle size Dv50 of the particles in the mixed slurry is 0.05 $\mu$m-1.5 $\mu$m, and optionally 0.1 $\mu$m-0.7 $\mu$m.

In some embodiments, the median particle size Dv50 of the particles in the mixed slurry is optionally 0.05 $\mu$m, 0.1 $\mu$m, 0.2 $\mu$m, 0.3 $\mu$m, 0.4 $\mu$m, 0.5 $\mu$m, 0.6 $\mu$m, 0.7 $\mu$m, 0.8 $\mu$m, 0.9 $\mu$m, 1 $\mu$m, 1.1 $\mu$m, 1.2 $\mu$m, 1.3 $\mu$m, 1.4 $\mu$m, 1.5 $\mu$m, or a numerical value in a range formed by any two of the foregoing values.

The median particle size Dv50 of the particles in the mixed slurry can be measured by any known means, including but not limited to the centrifugal sedimentation method and a laser particle size analyzer. As an example, the sample is first centrifuged, deposited, and filtered to obtain a particle sample from the initial mixed slurry, 0.1 g-0.13 g of the particle sample to be tested is weighed in a 50 mL beaker, 5 g of acetone is added, a stirring bar of about 2.5 mm is placed in, and then the mixture is sealed with plastic wrap. After ultrasonic treatment for 5 min, the sample is transferred to a magnetic stirrer and stirred at 500 rpm for more than 20 min. Two samples are taken from each batch of products for testing. The test is performed using a Mastersizer 2000E laser particle size analyzer produced by Malvern Instruments Ltd., UK.

Controlling the median particle size Dv50 of the particles in the mixed slurry to be within an appropriate particle size range can not only avoid the relatively long grinding time required due to a too-small particle size and the increased risk of subsequent physical gelation of the slurry, thereby reducing the difficulty of subsequent processing and the requirements for production devices, but also reduce the presence of the relatively low crystallinity and a relatively large number of impurity phases in the positive electrode active material due to a too-large particle size, thereby ensuring the dynamics performance of the positive electrode active material during the charging and discharging.

In some embodiments, the solid content of the mixed slurry is 15%-50%, and optionally 25%-40%.

In some embodiments, the solid content of the mixed slurry is optionally 15%, 20%, 25%, 30%, 35%, 40%, 45%, 50%, or a numerical value in a range formed by any two of the foregoing values.

Controlling the solid content of the mixed slurry to be within an appropriate range can not only avoid the reduction in production capacity due to a too-low solid content of the mixed slurry, which causes mass production feasible, but also avoid the increased equipment wear and requirements for production devices due to a too-high solid content of the mixed slurry, thereby balancing production costs and production scale to ensure that the mixed slurry is suitable for industrial applications.

In some embodiments, the mixed slurry includes a carbon source.

The addition of the carbon source is beneficial for enhancing the conductive performance of the positive electrode active material and increasing the first discharge capacity of the battery.

In some embodiments, the mixed slurry further includes a dispersant, and the dispersant includes one or more of polyethylene glycol and polyvinyl alcohol.

The dispersant is beneficial for the uniform dispersion of the carbon source in the mixed slurry, thus facilitating the subsequent preparation of the positive electrode active material.

In some embodiments, adding the raw material including the sodium source, the iron source, and the phosphorus source into the solvent to obtain the mixed slurry specifically includes:
stirring and grinding the raw material including the sodium source, ferrous oxalate and phosphorus source added into the solvent until the median particle size Dv50 of the particles in the slurry is 0.05 $\mu$m-1.5 $\mu$m, and then mixing the slurry with the carbon source to obtain the mixed slurry.

Controlling the median particle size Dv50 of the particles in the mixed slurry to be within an appropriate particle size range can not only avoid the relatively long grinding time required due to a too-small particle size and the increased risk of subsequent physical gelation of the slurry, thereby reducing the difficulty of subsequent processing and the requirements for production devices, but also reduce the presence of the relatively low crystallinity and a relatively large number of impurity phases in the positive electrode active material due to a too-large particle size, thereby ensuring the dynamics performance of the positive electrode active material during the charging and discharging.

In some embodiments, the preparation method includes:
stirring and grinding the raw material including the sodium source, ferrous oxalate and phosphorus source added into the solvent until the median particle size Dv50 of the particles in the slurry is 0.1 $\mu$m-0.7 $\mu$m, and then mixing the slurry with the carbon source to obtain the mixed slurry.

Further controlling the median particle size Dv50 of the particles in the mixed slurry to be 0.1 $\mu$m-0.7 $\mu$m before mixing with the carbon source reduces the difficulty of initial grinding. The addition of the carbon source can significantly increase the viscosity of the slurry, and increase the grinding power and grinding time.

In some embodiments, the sodium source includes one or more of sodium carbonate, sodium phosphate, sodium dihydrogen phosphate, disodium hydrogen phosphate, sodium pyrophosphate, sodium bicarbonate, sodium oxalate, sodium acetate, sodium citrate, sodium nitrate, and sodium hydroxide.

In some embodiments, the phosphorus source includes one or more of sodium dihydrogen phosphate, disodium hydrogen phosphate, sodium phosphate, ammonium dihydrogen phosphate, diammonium hydrogen phosphate, sodium pyrophosphate, trisodium monohydrogen pyrophosphate, disodium dihydrogen pyrophosphate, monosodium trihydrogen pyrophosphate, phosphoric acid, and pyrophosphoric acid.

In some embodiments, the solvent is selected from one or more of ethanol, water, and ethylene glycol.

The solvent and dispersant described above are both beneficial for the complete dissolution of the raw material to form a uniformly mixed slurry, thus facilitating the control of the sizes of particles in the mixed slurry.

In some embodiments, the carbon source includes an inorganic carbon source or an organic carbon source. The inorganic carbon source includes one or more of natural graphite, artificial graphite, carbon black, a carbon nanotube, and graphene, and the organic carbon source includes one or more of sucrose, glucose, citric acid, starch, cyclodextrin, and asphalt.

Both the inorganic carbon source and the organic carbon source are beneficial for enhancing the conductive performance of the positive electrode active material.

[Positive Electrode Plate]

A positive electrode plate includes a positive electrode current collector and a positive electrode active material layer formed on at least a portion of the surface of the positive electrode current collector, where the positive electrode active material layer includes the positive electrode active material according to some embodiments.

The positive electrode active material layer may also include a conductive agent to improve the conductive property of the positive electrode. The conductive agent is optionally one or more of super P, acetylene black, carbon black, Ketjen black, a carbon dot, a carbon nanotube, graphite, graphene, and a carbon nanofiber.

The positive electrode active material layer may also include a binder to firmly bond the positive electrode active material and the optional conductive agent to the positive electrode current collector. The binder is optionally at least one of polyvinylidene fluoride (PVDF), polytetrafluoroethylene (PTFE), polyacrylic acid (PAA), polyvinyl alcohol (PVA), ethylene-vinyl acetate copolymer (EVA), styrene butadiene rubber (SBR), carboxymethyl cellulose (CMC), sodium alginate (SA), polymethacrylic acid (PMA), and carboxymethyl chitosan (CMCS).

The positive electrode current collector may be made of a conductive carbon plate, a metal foil, a carbon-coated metal foil, a porous metal plate, or a composite current collector. The conductive carbon material of the conductive carbon plate is optionally one or more of super P, carbon black, Ketjen black, a carbon dot, a carbon nanotube, graphite, graphene, and a carbon nanofiber. The metal materials of the metal foil, the carbon-coated metal foil, and the porous metal plate are each independently selected from at least one of copper, aluminum, nickel, and stainless steel. The composite current collector may be a composite current collector formed by combining a metal foil and a polymer base film.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry; and coating the positive electrode current collector with the positive electrode slurry, and performing drying, cold pressing, and other processes, such that the positive electrode plate can be obtained.

[Negative Electrode Plate]

The negative electrode plate may only include a negative electrode current collector without a negative electrode active material. The negative electrode plate may also have a metal phase pre-deposited on the negative electrode current collector.

In some embodiments, a metal foil or a composite current collector may be used as the negative electrode current collector. For example, as the metal foil, an aluminum foil or a copper foil may be used. The composite current collector may include a polymer material substrate and a metal layer formed on at least one surface of the polymer material substrate. The composite current collector can be fabricated by forming a metal material (copper, copper alloy, nickel, nickel alloy, titanium, titanium alloy, silver, silver alloy, etc.) on a polymer material substrate (such as polypropylene (PP), polyethylene terephthalate (PET), polybutylene terephthalate (PBT), polystyrene (PS), and polyethylene (PE)).

In some embodiments, the negative electrode plate includes a negative electrode current collector and a bottom coating arranged on at least one surface of the negative electrode current collector, where the bottom coating includes one or more of a carbon nanotube, graphite, graphene, a silver-carbon composite nanoparticle, and a tin-carbon composite nanoparticle.

The bottom coating described above not only has excellent electrical conductivity, but is also conducive to the uniform deposition of metal ions on the surface of the current collector, thereby improving the cycle performance and safety of the battery.

In some embodiments, the surface density of the bottom coating is 5 g/m$^2$ to 50 g/m$^2$.

In some embodiments, the surface density of the bottom coating is optionally 5 g/m$^2$, 10 g/m$^2$, 15 g/m$^2$, 20 g/m$^2$, 25 g/m$^2$, 30 g/m$^2$, 35 g/m$^2$, 40 g/m$^2$, 45 g/m$^2$, 50 g/m$^2$, or a numerical value in a range formed by any two of the foregoing values.

The bottom coating with a surface density of 5 g/m$^2$ to 50 g/m$^2$ is conducive to the uniform distribution of nucleation sites, promotes the uniform deposition of metals, and does not affect the transmission of electrons.

In some embodiments, the thickness of the bottom coating is 2 $\mu$m to 100 $\mu$m.

In some embodiments, the thickness of the bottom coating is optionally 2 $\mu$m, 5 $\mu$m, 10 $\mu$m, 15 $\mu$m, 20 $\mu$m, 25 $\mu$m, 30 $\mu$m, 35 $\mu$m, 40 $\mu$m, 45 $\mu$m, 50 $\mu$m, 55 $\mu$m, 60 $\mu$m, 65 $\mu$m, 70 $\mu$m, 75 $\mu$m, 80 $\mu$m, 85 $\mu$m, 90 $\mu$m, 95 $\mu$m, 100 $\mu$m, or a numerical value in a range formed by any two of the foregoing values.

The thickness of the bottom coating is controlled to be 2 $\mu$m to 100 $\mu$m, and thus sufficient nucleation sites can be provided, which is conducive to the uniform deposition of metal ions, thereby inhibiting dendrite formation.

[Separation Film]

In some embodiments, the secondary battery further includes a separation film. The present application does not particularly limit the type of the separation film, and any porous-structure separation film known to have good chemical stability and mechanical stability may be selected and used.

In some embodiments, the material of the separation film may be selected from at least one of polyethylene, polypropylene, polyvinylidene fluoride, aramid, polyethylene terephthalate, polytetrafluoroethylene, polyacrylonitrile, polyimide, polyamide, polyester, and a natural fiber. The separation film may be a single-layer film or a multi-layer composite film, and there is no particular limitation on this. When the separation film is a multi-layer composite film, the materials of the layers may be the same or different, and there is no particular limitation on this.

In some embodiments, the positive electrode plate, the negative electrode plate, and the separation film may be manufactured into an electrode assembly through a winding process or a stacking process.

In some embodiments, the secondary battery may include an outer packaging. The outer packaging can be used for packaging the electrode assembly and electrolyte described above.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic, and examples of the plastic may include polypropylene, polybutylene terephthalate, polybutylene succinate, and the like.

[Secondary Battery]

A secondary battery includes a positive electrode plate and a negative electrode plate, where the positive electrode plate includes the positive electrode active material according to some embodiments or a positive electrode active material prepared by the preparation method according to some embodiments.

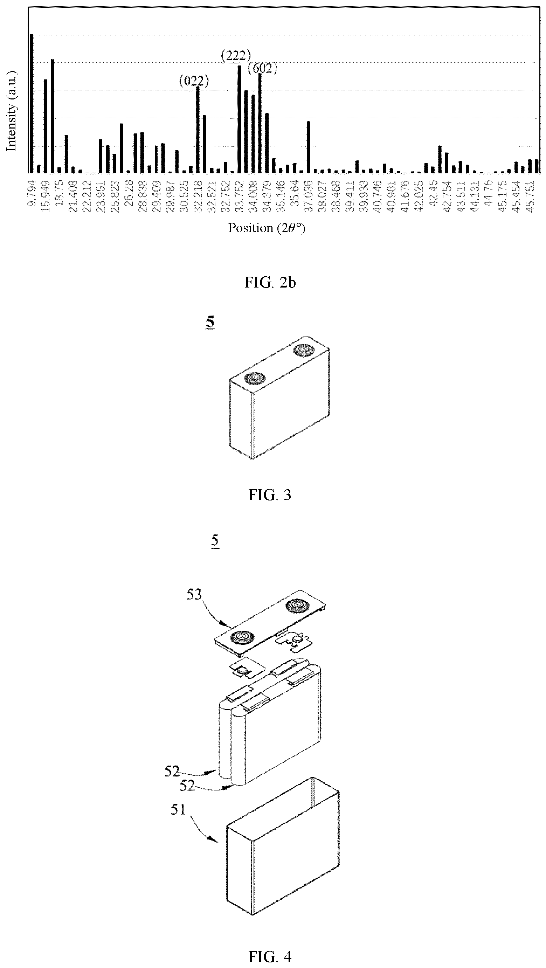

The present application does not particularly limit the shape of the secondary battery, and it may have a cylindrical shape, a prismatic shape, or any other shape. For example, FIG. 3 shows a secondary battery 5 having a prismatic structure as one example.

In some embodiments, the secondary battery further includes a separation film and an electrolytic solution.

In some embodiments, the secondary battery is a negative electrode-free sodium secondary battery.

The negative electrode-free sodium secondary battery refers to a battery formed without actively arranging a negative electrode active material layer on the negative electrode side during the manufacturing of the battery. For example, during the manufacturing of the battery, a negative electrode active material layer is formed without arranging a sodium metal or carbonaceous active material layer at the negative electrode by processes of coating, deposition, or the like. During the first charge, sodium ions gain electrons at the positive electrode side and are deposited as sodium metal on the surface of the current collector to form a sodium metal phase. During discharge, the sodium metal can be converted into sodium ions and return to the positive electrode, thus achieving cyclic charge and discharge. Compared with other sodium secondary batteries, the negative electrode-free sodium secondary battery may have a higher energy density due to the lack of a negative electrode active material layer.

In some embodiments, in order to enhance battery performance, some conventional substances that can be used as negative electrode active materials, such as carbonaceous materials, metal oxides, and alloys, may be arranged on the negative electrode side of the negative electrode-free sodium secondary battery. Although these materials have a certain capacity, they are not used as the main negative electrode active material in the battery due to their small amount, and therefore are not considered to form a negative electrode active material layer that plays a role in sodium intercalation. The sodium secondary battery thus constructed can still be considered as a negative electrode-free sodium secondary battery.

In some embodiments, the CB value of the negative electrode-free sodium secondary battery is less than or equal to 0.1.

The CB value is defined as the ratio of the unit area capacity of the negative electrode plate to the unit area capacity of the positive electrode plate in a secondary battery. Since the negative electrode-free battery includes no or only a small amount of negative electrode active material, the capacity per unit area of the negative electrode plate is small, and the CB value of the secondary battery is less than or equal to 0.1.

In some embodiments, referring to FIG. 4, the outer packaging may include a housing 51 and a cover plate 53. The housing 51 may include a bottom plate and a side plate connected to the bottom plate, and the bottom plate and the side plate define, in an enclosing manner, an accommodating cavity. The housing 51 is provided with an opening communicating with the accommodating cavity, and the cover plate 53 is capable of lidding the opening to close the accommodating cavity. The positive electrode plate, the negative electrode plate, and the separation film may be subjected to a winding process or a stacking process to form an electrode assembly 52. The electrode assembly 52 is packaged in the accommodating cavity. The non-Newtonian fluid electrolyte composition is infiltrated into the electrode assembly 52. The number of the electrode assembly 52 included in the secondary battery 5 may be one or more, and those skilled in the art can select the number according to specific and actual needs.

[Battery Module]

In some embodiments, the secondary battery may be assembled into a battery module. The number of secondary batteries included in the battery module may be one or more, and the specific number may be selected by those skilled in the art based on the use and capacity of the battery module.

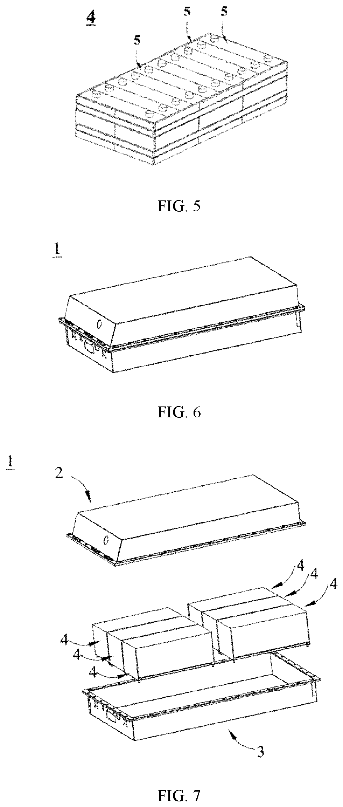

FIG. 5 shows a battery module 4 as one example. Referring to FIG. 5, in the battery module 4, a plurality of secondary batteries 5 may be sequentially arranged in a length direction of the battery module 4. Certainly, the arrangement may also be in any other manner. Further, the plurality of secondary batteries 5 may be fixed by a fastener.

Optionally, the battery module 4 may further include a shell having an accommodating space in which the plurality of secondary batteries 5 are accommodated.

[Battery Pack]

In some embodiments, the battery module described above may also be assembled into a battery pack. The number of the battery modules included in the battery pack may be one or more, and the specific number may be selected by those skilled in the art based on the use and capacity of the battery pack.

FIG. 6 and FIG. 7 show a battery pack 1 as one example. Referring to FIG. 6 and FIG. 7, the battery pack 1 may include a battery case and a plurality of battery modules 4 arranged in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

[Electric Device]

In one embodiment of the present application, provided is an electric device, which includes at least one of the secondary battery according to any embodiment, the battery module according to any embodiment, or the battery pack according to any embodiment.

The electric device includes at least one of the secondary battery, the battery module, or the battery pack provided in the present application. The secondary battery, the battery module, or the battery pack can be used as a power source for the electric device, and they can also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

As the electric device, a secondary battery, a battery module, or a battery pack may be selected based on its use requirements.

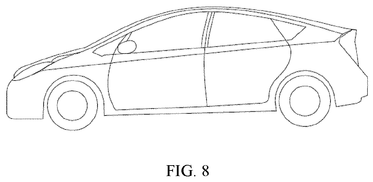

FIG. 8 shows an electric device as one example. The electric device is a pure electric vehicle, a hybrid electric vehicle, a plug-in hybrid electric vehicle, or the like. To meet the requirements of the electric device for high power and high energy density of the secondary battery, the battery pack or the battery module may be used.

As another example, the device may be a mobile phone, a tablet computer, a laptop computer, or the like. The device is generally required to be light and thin, and a secondary battery can thus be used as a power source.

**Examples**

Hereinafter, examples of the present application are described. The examples described below are illustrative and are merely used to explain the present application, and they should not be construed as limiting the present application. Examples without techniques or conditions specified therein are implemented according to techniques or conditions described in the literature in the art or according to product instructions. Reagents or instruments used herein without specified manufacturers are all commercially available conventional products.

**I. Preparation method**

Example 1

1) Preparation of positive electrode active materials

Sodium pyrophosphate, ferrous oxalate, and ammonium dihydrogen phosphate were dissolved in deionized water at a molar ratio of 0.998:3:2, stirred continuously for 30 min at room temperature, with a homogeneous shear rate of 630 $S^{-1}$, and ball-milled to an average particle size of 0.2 $\mu$m, and a carbon source was added. The mixture was mixed to obtain a mixed slurry with a solid content of 35%. The mixed slurry described above was spray dried with an air inlet temperature of 220 °C and an air outlet temperature of 109 °C to obtain a powdered positive electrode active material precursor. Finally, under a $N_2$ atmosphere, the temperature was increased to 320 °C at a heating rate of 2 °C and kept for 4 h, and then the temperature was further increased to 550 °C at a heating rate of 2 °C and kept for 10 h. The sintered product was crushed and sieved to obtain a $Na_{3.98}Fe_3(PO_4)_2P_2O_7$ positive electrode active material.

2) Preparation of positive electrode plate

2.5 wt% polyvinylidene fluoride binder was fully dissolved in N-methylpyrrolidone (NMP), and then 2.0 wt% Super P, 1.0 wt% carbon nanotubes, and 94.5 wt% of the positive electrode active material described above were added. The mixture was stirred and mixed uniformly to obtain a positive electrode slurry. The surface of the current collector aluminum foil was coated with the slurry evenly, and the current collector aluminum foil was then transferred to a vacuum drying oven for complete drying. The dried electrode plate was calendered and then punched to obtain a positive electrode plate.

3) Preparation of negative electrode plate

Single-walled carbon nanotubes and carboxymethyl cellulose (CMC) were added to deionized water at a mass ratio of 1:0.4, and the mixture was stirred to obtain a uniform slurry. The surface of the negative electrode current collector copper foil was coated with the slurry, which was then transferred to a vacuum drying oven for complete drying, and then punched to obtain a negative electrode plate without a negative electrode structure.

4) Electrolytic solution

In a glove box under argon atmosphere ($H_2O$ < 0.1 ppm, $O_2$ < 0.1 ppm), a sodium salt sodium hexafluorophosphate ($NaPF_6$) was dissolved in an organic solvent dimethoxyethane (DME), and the mixture was uniformly stirred to obtain an electrolytic solution with a sodium salt concentration of 1.5mol/L.

5) Separation film

A polypropylene film is used as the separation film.

6) Preparation of battery

The positive electrode plate, the separation film, and the negative electrode plate were stacked in sequence, with the separation film placed between the positive electrode plate and the negative electrode plate to fulfill the function of separation. The stack was then wound to obtain a bare battery cell, and the tabs were welded to the bare battery cell. The bare battery cell was placed in an aluminum shell, which was then baked at 80 °C to remove water, injected with an electrolytic solution, and sealed to obtain an uncharged battery. The uncharged battery was then subjected to the processes of standing, hot and cold pressing, formation, shaping, capacity testing, and the like sequentially, to obtain the negative electrode-free sodium metal battery product of Example 1.

Examples 2-11

The batteries of Examples 2-11 were prepared using a method similar to that of Example 1 except that the preparation parameters for the positive electrode active material were adjusted. The specific parameters are shown in Table 1.

Comparative Examples 1-4

The batteries of Comparative Examples 1-4 were prepared using a method substantially similar to that of Example 1 except that the homogeneous shear rates were all adjusted to be less than 300 $S^{-1}$. The specific parameters are shown in Table 1.

**II. Performance test**

1. Mixed slurry

1) Initial mixed slurry particle size test

The test was performed by using the centrifugal sedimentation method and a laser particle size analyzer. The sample was first centrifuged, deposited, and filtered to obtain a particle sample from the initial mixed slurry, 0.1 g-0.13 g of the particle sample was weighed in a 50 mL beaker, 5 g of acetone was added, a stirring bar of about 2.5 mm was placed in, and then the mixture was sealed with plastic wrap. After ultrasonic treatment for 5 min, the sample is transferred to a magnetic stirrer and stirred at 500 rpm for more than 20 min. Two samples are taken from each batch of products for testing. The test is performed using a Mastersizer 2000E laser particle size analyzer produced by Malvern Instruments Ltd., UK.

2) Homogeneous shear rate test

The average shear rate was used to measure the homogeneous shear rate of the fluid. The average shear rate is the sum of the axial average shear rate and the radial average shear rate.
The calculation formula for the radial average shear rate is as follows:

$$\overline{\gamma_r} = \frac{4K^2 \omega \, ln(1/K)}{(1 - K^2)^2}$$

In the formula, $\overline{\gamma_r}$ is the radial average shear rate, $S^{-1}$; K is the ratio of the rotor outer diameter to the stator outer diameter, and $\omega$ is the rotor angular velocity;

The calculation formula for the axial average shear rate is as follows:

$$\overline{\gamma_a} = \frac{R_3 \Delta P}{\eta L} \left( \frac{1-K}{\ln(1/K)} - \frac{1+K+K^2}{3(1+K)} \right)$$

In the formula, $\overline{\gamma_a}$ is the axial average shear rate, $S^{-1}$; $R_3$ is the stator outer diameter in a unit of m; $\eta$ is the liquid viscosity, Pa·S; L is the length (the axial length that the material liquid reaches) in a unit of m; $\Delta P$ is the inlet and outlet pressure in a unit of Pa, which is in positive correlation to the slurry volume flow rate.

2. Positive electrode active material slurry

1) Crystallinity test

The crystallinity was tested by using the X-ray diffraction method. The integrated area of the strongest diffraction peak (i.e., the (222) peak) (As) was compared with the integrated area of the standard substance (Ag), and As and Ag were used as indicators for calculating crystallinity, which was calculated as crystallinity = As/Ag × 100%. The (222) peak of the standard substance was located at 33.304° on the horizontal coordinate 2θ of the XRD.

2) Id value test: the (602) crystal plane orientation growth

The XRD pattern of the positive electrode active material was tested by the X-ray method, and the ratio of the intensity of the (602) peak to the intensity of the (022) peak was calculated as Id = $I_{(602)}/I_{(022)}$. The ratio of the intensity of the (602) peak (the (602) peak was located at 34.304° on the horizontal coordinate 2θ of the XRD) to the intensity of the (022) peak (the (022) peak was located at 32.218° on the horizontal coordinate 2θ of the XRD) in the $Na_4Fe_3(PO_4)_2(P_2O_7)_4$ standard card was 1.15.

3. Test of battery performance

1) First discharge capacity test

The process for testing the first discharge capacity was as follows: The prepared battery was charged to 3.75 V at a constant current of 1 C at 25 °C, charged at a constant voltage of 3.75 V until the current dropped to 0.05 C, and then discharged to 1.5 V at a constant current of 1 C to obtain the first-cycle discharge capacity (Cd1).

2) Coulombic efficiency test

The process for testing the coulombic efficiency was as follows: The prepared battery was charged to 3.75 V at a constant current of 1/5 C at 25 °C, and then charged at a constant voltage of 3.75 V until the current dropped to 0.05 C to obtain the first charge capacity (Cc1); the battery was then discharged to 1.5 V at a constant current of 1/5 C to obtain the first discharge capacity (Cd1). The coulombic efficiency of the battery was calculated according to the following formula: coulombic efficiency of the battery = first discharge capacity (Cd1)/first charge capacity (Cc1). The test process of the comparative examples and other examples was the same as above.

3) Capacity retention rate test of the battery after cycling

The process for testing the capacity retention rate of the battery was as follows: The prepared battery was charged to 3.75 V at a constant current of 1 C at 25 °C, charged at a constant voltage of 3.75 V until the current dropped to 0.05 C, and then discharged to 1.5 V at a constant current of 1 C. The obtained capacity was recorded as the initial capacity (C0). The steps described above were repeated for the same battery described above, and the discharge capacity (Cn) of the battery after the nth cycle was recorded at the same time. The battery capacity retention rate Pn after each cycle was calculated as Pn = Cn/C0 × 100%. A curve of the battery capacity retention rate versus the number of cycles was obtained, with the 100 point values of P1, P2, ..., and 100 as the vertical coordinate and the corresponding cycle numbers as the horizontal coordinate. In this test process, the first cycle corresponded to n = 1, the second cycle corresponded to n = 2, ..., and the 100th cycle corresponded to n = 100. The capacity retention rate data of the battery corresponding to the examples and comparative examples in Table 2 were measured after 100 cycles under the test conditions described above, that is, the value of P100. The test process of the comparative examples and other examples was the same as above.

### III. Analysis of test results of examples and comparative examples

The batteries of examples and comparative examples were prepared according to the methods described above, and various performance parameters were measured. The results are shown in the table below.

Table 1

| No. | Positive electrode active material | | | | | | | |
|---|---|---|---|---|---|---|---|---|
| | Name(s) | Grinding medium | Solvent | Slurry solid content (wt%) | Homogeneous shear rate (S$^{-1}$) | Slurry particle size Dv50 (μm) | Id | Crystallinity |
| Example 1 | $Na_{3.98}Fe_3(PO_4)_2P_2O_7$ | Sand | Water | 35 | 630 | 0.20 | 1.08 | 0.95 |
| Example 2 | $Na_4Fe_{2.8}(PO_4)_2P_2O_7$ | Sand | Water | 35 | 630 | 0.19 | 1.11 | 0.96 |
| Example 3 | $Na_{3.98}Fe_{2.8}(PO_4)_2P_2O_7$ | Sand | Water | 35 | 630 | 0.18 | 1.12 | 0.98 |
| Example 4 | $Na_4Fe_3(PO_4)_2P_2O_7$ | Sand | Water | 35 | 630 | 0.20 | 1.07 | 0.89 |
| Example 5 | $Na_4Fe_3(PO_4)_2P_2O_7$ | Sand | Water | 35 | 550 | 0.60 | 0.86 | 0.81 |
| Example 6 | $Na_4Fe_3(PO_4)_2P_2O_7$ | Sand | Water | 25 | 550 | 0.40 | 1.02 | 0.83 |
| Example 7 | $Na_4Fe_3(PO_4)_2P_2O_7$ | Sand | Water + ethanol | 35 | 310 | 0.50 | 0.98 | 0.85 |
| Example 8 | $Na_4Fe_3(PO_4)_2P_2O_7$ | Sand | Ethanol | 40 | 550 | 0.21 | 1.08 | 0.95 |
| Example 9 | $Na_4Fe_3(PO_4)_2P_2O_7$ | Ball | Water | 35 | 800 | 0.15 | 1.15 | 1.00 |
| Example 10 | $Na_4Fe_3(PO_4)_2P_2O_7$ | Ball | Ethanol | 35 | 650 | 0.15 | 1.14 | 0.99 |
| Example 11 | $Na_4Fe_3(PO_4)_2P_2O_7$ | Ball | Water + ethanol | 35 | 720 | 0.16 | 1.14 | 0.98 |
| Comparative Example 1 | $Na_4Fe_3(PO_4)_2P_2O_7$ | Sand | Water | 35 | 220 | 1.20 | 0.64 | 0.66 |
| Comparative Example 2 | $Na_4Fe_3(PO_4)_2P_2O_7$ | Sand | Ethanol | 35 | 250 | 1.00 | 0.68 | 0.65 |
| Comparative Example 3 | $Na_4Fe_3(PO_4)_2P_2O_7$ | Sand | Water | 10 | 250 | 0.80 | 0.80 | 0.70 |
| Comparative Example 4 | $Na_4Fe_3(PO_4)_2P_2O_7$ | Sand | Water | 45 | 250 | 1.30 | 0.62 | 0.61 |

Table 2

| No. | Battery | | |
|---|---|---|---|
| | First discharge capacity/mAh·g $^{-1}$ | First-cycle coulombic efficiency | Capacity retention rate after 100 cycles |
| Example 1 | 117.80 | 99.2% | 98.8% |
| Example 2 | 118.10 | 99.5% | 99.0% |
| Example 3 | 117.90 | 99.8% | 99.3% |
| Example 4 | 115.40 | 97.6% | 97.2% |
| Example 5 | 112.70 | 96.6% | 97.5% |
| Example 6 | 113.40 | 96.8% | 97.6% |
| Example 7 | 113.70 | 97.2% | 98.1% |
| Example 8 | 117.80 | 99.2% | 98.8% |
| Example 9 | 118.40 | 99.3% | 99.2% |
| Example 10 | 118.30 | 99.2% | 99.1% |
| Example 11 | 118.00 | 99.4% | 99.0% |
| Comparative Example 1 | 108.50 | 96.3% | 96.2% |
| Comparative Example 2 | 109.40 | 96.6% | 96.2% |
| Comparative Example 3 | 109.00 | 98.6% | 97.3% |
| Comparative Example 4 | 108.20 | 96.2% | 96.0% |

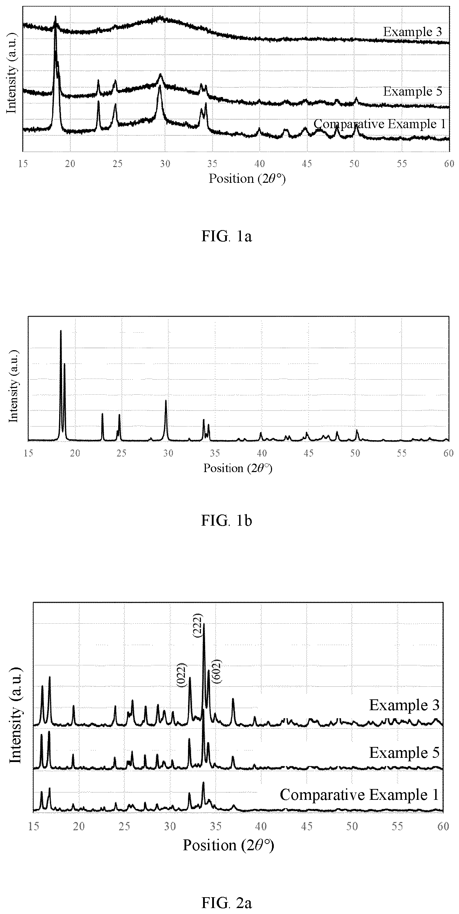

The precursor obtained after spray drying of the mixed slurry was characterized by the XRD. The results are shown in FIG. 1a. Compared with the standard card of ferrous oxalate shown in FIG. 1b, it can be clearly seen that ferrous oxalate with high crystallinity still remains in the precursor component in Comparative Example 1, while in Example 5, by increasing the shear rate, the crystallinity of ferrous oxalate in the precursor is significantly reduced, and in Example 3, the shear rate is further increased, and the precursor is completely amorphous, indicating that the raw material ferrous oxalate fully participates the reaction.

The positive electrode active material obtained after calcination was characterized by the XRD. The results are shown in FIG. 2a, and the XRD pattern of the standard card of sodium ferric pyrophosphate phosphate for comparison is shown in FIG. 2b. As can be seen from FIG. 2a, with the continuous increase of the shear rate, the ratio Id of the intensity of the (602) peak to the intensity of the (022) peak in the XRD diffraction pattern of the positive electrode active material continues to increase. This is because the precursor is coated with ferrous oxalate, which limits the (602) crystal plane growth. As the raw material components completely enter the precursor, the crystallinity of the positive electrode active material is significantly increased after calcination.

Examples 1-11 all include a positive electrode active material. The positive electrode active material includes a polyanionic compound having a general formula shown in formula I, and the positive electrode active material has a crystallinity of 0.8-1,

$$Na_xFe_{y1}M_{y2}(PO_4)_z(P_2O_7)_k$$

where M comprises at least one of Mg, Al, Sc, Ti, V, Cr, Mn, Fe, Co, Ni, Cu, Zn, Zr, Nb, Mo, Sn, Hf, Ta, W, and Pb; $1 \leq x \leq 7$, $1 \leq y_1 + y_2 \leq 4$, $1 \leq z \leq 2$, and $1 \leq k \leq 4$.

As can be seen from the comparison between Examples 1-11 and Comparative Examples 1-4, controlling the crystallinity of the positive electrode active material to be 0.8-1 is beneficial for increasing the first discharge capacity of the battery, thereby enhancing the battery performance.

As can be seen from the comparison between Examples 1-11 and Comparative Examples 1-4, controlling the homogeneous shear rate to be 300 S$^{-1}$-900 S$^{-1}$ is beneficial for increasing the crystallinity of the positive electrode active material and the first discharge capacity of the battery, thereby enhancing the battery performance.

As can be seen from the comparison of Examples 1-4, the presence of sodium vacancies or iron vacancies in sodium ferric pyrophosphate phosphate helps to further increase the capacity and enhance cycle performance of the battery.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

**Claims**

1.  A positive electrode active material, wherein the positive electrode active material comprises a polyanionic compound having a general formula shown in formula I, and crystallinity of the positive electrode active material is 0.8-1,

    $$Na_xFe_{y1}M_{y2}(PO_4)_z(P_2O_7)_k \qquad \text{Formula I}$$

    where M includes at least one of Mg, Al, Sc, Ti, V, Cr, Mn, Fe, Co, Ni, Cu, Zn, Zr, Nb, Mo, Sn, Hf, Ta, W, and Pb; $1 \leq x \leq 7$, $1 \leq y_1 + y_2 \leq 4$, $1 \leq z \leq 2$, and $1 \leq k \leq 4$.

2.  The positive electrode active material according to claim 1, wherein the intensity of a (602) peak to the intensity of a (022) peak in an XRD diffraction pattern of the positive electrode active material are at a ratio Id of 0.9-1.5.

3.  The positive electrode active material according to claim 1 or 2, wherein the positive electrode active material further comprises a carbon material located on at least a portion of a surface of primary particles of the polyanionic compound.

4.  A preparation method for a positive electrode active material, comprising the following steps:

    mixing a raw material comprising a sodium source, an iron source, and a phosphorus source with a solvent to obtain a mixed slurry, wherein optionally, the raw material further comprises an M source; and
    drying and calcinating the mixed slurry to obtain a positive electrode active material, wherein the positive electrode active material comprises a polyanionic compound having a general formula shown in formula I, and the positive electrode active material has a crystallinity of 0.8-1,

    $$Na_xFe_{y1}M_{y2}(PO_4)_z(P_2O_7)_k \qquad \text{Formula I}$$

    wherein M comprises at least one of Mg, Al, Sc, Ti, V, Cr, Mn, Fe, Co, Ni, Cu, Zn, Zr, Nb, Mo, Sn, Hf, Ta, W, and Pb; $1 \leq x \leq 7$, $1 \leq y_1 + y_2 \leq 4$, $1 \leq z \leq 2$, and $1 \leq k \leq 4$.

5.  The preparation method for the positive electrode active material according to claim 4, wherein said mixing the raw material comprising the sodium source, the iron source, and the phosphorus source with the solvent to obtain the mixed slurry specifically comprises:
    stirring and grinding the raw material comprising the sodium source, ferrous oxalate, and the phosphorus source added into the solvent to obtain the mixed slurry, wherein the mixed slurry is subjected to a homogeneous shear rate of $300 \, S^{-1}$-$900 \, S^{-1}$.

6.  The preparation method for the positive electrode active material according to claim 4 or 5, wherein a median particle size Dv50 of particles in the mixed slurry is 0.05 $\mu$m-1.5 $\mu$m, and optionally 0.1 $\mu$m-0.7 $\mu$m.

7.  The preparation method for the positive electrode active material according to any one of claims 4 to 6, wherein a solid content of the mixed slurry is 15%-50%, and optionally 25%-40%.

8.  The preparation method according to any one of claims 4 to 7, wherein the mixed slurry comprises a carbon source.

9.  The preparation method for the positive electrode active material according to claim 8, wherein the preparation method comprises:
    stirring and grinding the raw material comprising the sodium source, the ferrous oxalate, and the phosphorus source added into the solvent until the median particle size Dv50 of the particles in the slurry is 0.1 $\mu$m-1.3 $\mu$m, and optionally 0.1 $\mu$m-0.7 $\mu$m, and then mixing the slurry with the carbon source to obtain the mixed slurry.

10. The preparation method according to any one of claims 4 to 9, wherein the sodium source comprises one or more of sodium carbonate, sodium phosphate, sodium dihydrogen phosphate, disodium hydrogen phosphate, sodium pyrophosphate, sodium bicarbonate, sodium oxalate, sodium acetate, sodium citrate, sodium nitrate, and sodium hydroxide.

11. The preparation method according to any one of claims 4 to 10, wherein the phosphorus source comprises one or more of sodium dihydrogen phosphate, disodium hydrogen phosphate, sodium phosphate, ammonium dihydrogen phosphate, diammonium hydrogen phosphate, sodium pyrophosphate, trisodium monohydrogen pyrophosphate, disodium dihydrogen pyrophosphate, monosodium trihydrogen pyrophosphate, phosphoric acid, and pyrophosphoric acid.

12. The preparation method according to any one of claims 4 to 11, wherein the solvent comprises one or more of ethanol, water, and ethylene glycol.

13. The preparation method according to any one of claims 10 to 12, wherein the carbon source comprises an inorganic carbon source or an organic carbon source, the inorganic carbon source comprises one or more of natural graphite, artificial graphite, carbon black, a carbon nanotube, and graphene, and the organic carbon source comprises one or more of sucrose, glucose, citric acid, starch, cyclodextrin, and asphalt.

14. A secondary battery, comprising a positive electrode plate and a negative electrode plate, wherein the positive electrode plate comprises the positive electrode active material according to any one of claims 1 to 3 or a positive electrode active material prepared by the preparation method for the positive electrode active material according to any one of claims 4 to 13.

15. The secondary battery according to claim 14, wherein the secondary battery is a negative electrode-free sodium secondary battery.

16. The secondary battery according to claim 14 or 15, wherein the negative electrode plate comprises a negative electrode current collector and a bottom coating arranged on at least one surface of the negative electrode current collector, and the bottom coating comprises one or more of a carbon nanotube, graphite, graphene, a silver-carbon composite nanoparticle, and a tin-carbon composite nanoparticle.

17. The secondary battery according to claim 16, wherein a surface density of the bottom coating is 5 $g/m^2$-50 $g/m^2$.

18. The secondary battery according to claim 16 or 17, wherein a thickness of the bottom coating is 2 $\mu$m to 100 $\mu$m.

19. An electric device, comprising the secondary battery according to any one of claims 14 to 18.

FIG. 1a

FIG. 1b

FIG. 2a

FIG. 2b

FIG. 3

FIG. 4

FIG. 5

FIG. 6

FIG. 7

FIG. 8

# INTERNATIONAL SEARCH REPORT

| International application No. |
|---|
| **PCT/CN2023/124542** |

| A. | CLASSIFICATION OF SUBJECT MATTER |
|---|---|

H01M4/36(2006.01)i; H01M4/58(2010.01)i; H01M10/054(2010.01)i

According to International Patent Classification (IPC) or to both national classification and IPC

| B. | FIELDS SEARCHED |
|---|---|

Minimum documentation searched (classification system followed by classification symbols)

IPC: H01M4/-; H01M10/-

Documentation searched other than minimum documentation to the extent that such documents are included in the fields searched

Electronic data base consulted during the international search (name of data base and, where practicable, search terms used)

CNTXT, DWPI, ENTXTC, VEN: 电池, 正极, 活性材料, 聚阴离子化合物, +剪切速率, 结晶度, 钠, 铁, 磷酸, 焦磷酸, Na, Fe, PO4, P2O7, 磷酸焦磷酸铁钠, battery, positive electrode, active material, polyanionic compound, shear rate, crystallinity

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 112768673 A (WUHAN UNIVERSITY) 07 May 2021 (2021-05-07) description, embodiment 1, and paragraphs [0004]-[0023] | 1-19 |
| Y | CN 110521037 A (NIPPON ELECTRIC GLASS CO., LTD.) 29 November 2019 (2019-11-29) description, paragraphs [0013]-[0014] and [0040]-[0041] | 1-19 |
| Y | CN 111162256 A (SHANGHAI UNIVERSITY OF ELECTRIC POWER) 15 May 2020 (2020-05-15) claims 1-10 | 1-19 |
| Y | KR 20170056312 A (POSCO et al.) 23 May 2017 (2017-05-23) claims 1-11 | 1-19 |
| A | CN 103035913 A (FUJI JUKOGYO KABUSHIKI KAISHA et al.) 10 April 2013 (2013-04-10) entire document | 1-19 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 November 2023** | **20 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/124542**

| Patent document cited in search report | | | Publication date (day/month/year) | Patent family member(s) | | | Publication date (day/month/year) |
|---|---|---|---|---|---|---|---|
| CN | 112768673 | A | 07 May 2021 | None | | | |
| CN | 110521037 | A | 29 November 2019 | US | 2020112025 | A1 | 09 April 2020 |
| | | | | WO | 2019003904 | A1 | 03 January 2019 |
| | | | | JPWO | 2019003904 | A1 | 30 April 2020 |
| | | | | JP | 7197834 | B2 | 28 December 2022 |
| CN | 111162256 | A | 15 May 2020 | None | | | |
| KR | 20170056312 | A | 23 May 2017 | KR | 101759323 | B1 | 18 July 2017 |
| CN | 103035913 | A | 10 April 2013 | KR | 20130035911 | A | 09 April 2013 |
| | | | | JP | 2013084565 | A | 09 May 2013 |
| | | | | JP | 5255143 | B2 | 07 August 2013 |
| | | | | EP | 2575200 | A1 | 03 April 2013 |
| | | | | EP | 2575200 | B1 | 30 August 2017 |
| | | | | US | 2013084500 | A1 | 04 April 2013 |
| | | | | US | 8802293 | B2 | 12 August 2014 |

Form PCT/ISA/210 (patent family annex) (July 2022)

## EP 4 618 186 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310232757